(19) Europäisches Patentamt
European Patent Office
Office européen des brevets

(11) **EP 3 145 629 B1**

(12) **EUROPÄISCHE PATENTSCHRIFT**

(45) Veröffentlichungstag und Bekanntmachung des Hinweises auf die Patenterteilung:
**04.07.2018   Patentblatt 2018/27**

(21) Anmeldenummer: **15762926.2**

(22) Anmeldetag: **20.07.2015**

(51) Int Cl.:
***B01F 11/00*** *(2006.01)*      ***F16F 15/02*** *(2006.01)*
***F16F 15/36*** *(2006.01)*

(86) Internationale Anmeldenummer:
**PCT/EP2015/066518**

(87) Internationale Veröffentlichungsnummer:
**WO 2016/020176 (11.02.2016 Gazette 2016/06)**

(54) **ORBITALSCHÜTTLER MIT AUSWUCHTVORRICHTUNG**

ORBITAL SHAKER WITH BALANCING DEVICE

AGITATEUR ORBITAL MUNI D'UN DISPOSITIF D'ÉQUILIBRAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.08.2014   DE 102014111236**

(43) Veröffentlichungstag der Anmeldung:
**29.03.2017   Patentblatt 2017/13**

(73) Patentinhaber: **Adolf Kühner AG**
**4127 Birsfelden (CH)**

(72) Erfinder:
• **CORVES, Burkhard**
**B-4728 Hergenrath (BE)**
• **SCHUMACHER, Mathias**
**79539 Lörach (DE)**
• **BÜCHS, Jochen**
**52064 Aachen (DE)**
• **KLÖCKNER, Wolf**
**51065 Köln (DE)**

(74) Vertreter: **Kohlmann, Kai**
**Donatusstraße 1**
**52078 Aachen (DE)**

(56) Entgegenhaltungen:
**EP-A1- 2 450 099      WO-A1-00/29122**
**WO-A2-02/08630      DE-A1- 19 749 357**
**US-A- 2 405 404      US-A- 4 109 319**
**US-A- 5 142 936      US-A1- 2011 052 113**

**Beschreibung**

Die Erfindung betrifft einen Orbitalschüttler nach dem Oberbegriff des Anspruchs 1.

Beim Betrieb orbital geschüttelter Bioreaktoren entstehen im Betrieb unwuchtbedingte Kräfte und Momente, die u.a. von der variablen Beladung des Schütteltisches (Masse, Geometrie der Gefäße, Eigenschaften der Inhaltsstoffe sowie Masse und Schwerpunktslage des Schütteltisches), dem Schütteldurchmesser und der Schüttelfrequenz abhängen. Diese Unwuchten führen zu unerwünschten Schwingungen des Orbitalschüttlers, erhöhtem Verschleiß, Lärmbelastungen und Abweichungen von der definierten Schüttelbahn. Dadurch begrenzen diese Effekte bei gegebener Beladung und gegebenen Schütteldurchmesser die maximal mögliche Schüttelfrequenz. Für einige biotechnologische Prozesse sind jedoch hohe Schüttelfrequenzen erforderlich, um insbesondere eine ausreichende Versorgung der Kulturen mit Sauerstoff und eine ausreichende Vermischung zu ermöglichen.

Um die anregenden Unwuchtkräfte und -momente möglichst gering zu halten, können an Oribitalschüttlern Auswuchtgewichte angebracht werden. Da sich aber sowohl die Beladung des Schütteltisches (insbesondere deren Masse und Schwerpunktslage) als auch der Schütteldurchmesser häufig ändern ist bei jeder Änderung dieser Parameter eine neue Auswuchtung erforderlich.

Heutzutage auf den Markt befindliche Orbitalschüttler bieten in der Regel keine Möglichkeit den Wuchtzustand an die variable Beladung anzupassen.

Nur wenige Hersteller bieten die Möglichkeit an, Ausgleichmassen manuell zu verstellen und so eine Auswuchtung des Systems vorzusehen.

Die US 8 226 291 B2 offenbart einen Orbitalschüttler mit einer Auswuchtvorrichtung, bei der der Winkel zwischen zwei symmetrisch in einer Auswuchtebene unterhalb des Schütteltisches angeordneten Ausgleichmassen manuell verändert werden kann, sodass die resultierende radiale Fliehkraft variiert werden kann.

Bei den auf dem Markt befindlichen Schüttlern ist eine stufenlose Einstellung der Ausgleichsmassen nicht möglich. Eine Feinabstimmung der Auswuchtvorrichtung ist somit nicht durchführbar und die maximalen möglichen Drehzahlen begrenzt. Zudem ist für diese manuelle Auswuchtung eine Teildemontage des Orbitalschüttlers und damit ein gewisses technisches Know-How nötig. Hinzu kommt, dass diese Umrüstarbeiten mit einem gewissen Zeitaufwand verbunden sind. Die vorgenannten Nachteile führen dazu, dass das manuelle Verstellen der Ausgleichsmassen in der Praxis nicht bei jeder Änderung der Beladung oder des Schütteldurchmesser durchgeführt wird. Dies führt dazu, dass die maximal möglichen Schüttelfrequenzen stark begrenzt sind. Diese Begrenzung der maximalen Schüttelfrequenz beeinflusst einige bioverfahrenstechnische Prozesse negativ. Zudem führen die Schwingungen zu einem hohen Verschleiß und einer verstärkten Lärmbelastung.

Die US 8 226 291 B2 offenbart darüber hinaus auch eine automatische Positionierung der Ausgleichmassen in einer Auswuchtebene durch einen Stellmotor. Zur Regelung der Position der Ausgleichmassen sind Sensoren und eine Steuereinheit nötig. Es handelt sich dabei um ein aktives System mit automatischer Positionierung der Ausgleichsmassen.

Das automatisch aktive Auswuchten, wie in der US 8226291 B2 beschrieben, ist mit hohen Anschaffungskosten und der Gefahr des Ausfalls der nötigen Sensoren, der Aktuatorik und/ oder der Elektronik verbunden. Ein Ausfall eines Orbitalschüttlers ist in der Regel mit den Verlust der geschüttelten Kultur verbunden. Ein Ausfall eines Orbitalschüttlers in einem Forschungslabor kann je nach Experiment ein Zeitverlust von mehreren Wochen bedeuten. Dadurch entstehen direkte Kosten für den Personal- und Laboreinsatz. Folgekosten können durch eine spätere Markteinführung des zu untersuchenden Produktes kommen.

Fällt ein Orbitalschüttler in der Produktion aus, können durch den Verlust des Produkts erhebliche Ausfallkosten entstehen.

Durch die in der US 8 226 291 B2 beschriebene Verstellung der Ausgleichmassen lässt sich nur die Unwuchtkraft ausgleichen. Ein zusätzlicher Ausgleich des durch den vertikalen Abstand zwischen Auswuchtebene und Schwerpunkt der Beladung entstehenden Unwuchtmoments ist nicht möglich.

Die US 5558437 offenbart einen dynamischen Ausgleich der Unwuchtkraft und des Unwuchtmomentes. Unterhalb des Schütteltischs sind zwei Auswuchtebenen vorgesehen. In der oberen Auswuchtebene befindet sich das Ausgleichgewicht auf der gegenüberliegenden Seite der exzentrisch zur Rotationsachse des Rotors angeordneten Gelenkverbindung zum Schütteltisch. In der unteren Auswuchtebene befindet sich das Ausgleichgewicht auf der gleichen Seite wie die exzentrisch zur Rotationsachse des Rotors angeordnete Gelenkverbindung zum Schütteltisch. Durch Abstimmen der Parameter (radialer Abstand, Masse der Gewichte und vertikaler Abstand) kann das System so ausgewuchtet werden, dass die Unwuchtkraft und das Unwuchtmoment kompensiert werden. Eine manuelle oder automatische Verstellung der Parameter und somit auch eine Anpassung an eine variable Beladung des Schütteltischs ist nicht vorgesehen. EP 2 450 099 A1 offenbart einen Schüttler nach dem Oberbegriff des Anspruchs 1.

Die EP 2 450 099 A1 offenbart einen Schüttler mit einem ortsfesten Chassis und einem gegenüber dem ortsfesten Chassis beweglich gelagerten Schütteltisch zum Aufnehmen von Mischgut. Der Schütteltisch stützt sich über Gelenkstützen beweglich an dem Chassis ab. Der Schüttler verfügt über eine drehangetriebene Welle, auf der ein Exzenter angeordnet ist. Der Exzenter ist in einer Durchgangsbohrung in dem Schütteltisch gleitgelagert und legt mit seiner Exzentrizität E zwischen der Exzenterachse und der Achse der angetriebenen Welle den Radius einer Drehbewegung des Schütteltisches fest. Ferner verfügt der Schüttler über eine Führungseinrichtung die eine Verdrehung des Schütteltisches während der Drehbewegung unterbindet.

Die US 4 109 319 A offenbart einen Orbitalschüttler umfassend einen Schütteltisch mit einer Oberfläche zur Aufnahme einer Beladung. Der Orbitalschüttler umfasst weiter einen um eine Rotationsachse drehbaren Rotor, der einen Antriebsmotor mit einem Exzenter verbindet. In dem Exzenter ist ein Lager angeordnet, das einen fest mit dem Schütteltisch verbundenen Stift aufnimmt. Der in das Exzenterlager eingreifende Stift bildet ein Drehgelenk, das den Rotor und den Schütteltisch drehbeweglich um eine Gelenkachse miteinander verbindet, die mit einem Parallelversatz zu der Achse des Rotors verläuft. Auf der Oberseite des Antriebsgehäuses (12) sind an den Ecken Führungselemente angeordnet, die eine Rotation des Schütteltisches verhindern und diesen zu einer translatorischen Kreisbewegung zwingen.

Die US 2011/052113 A1 offenbart eine Auswuchtvorrichtung insbesondere für Schwungräder von Schneemobilen. Die Auswuchtvorrichtung umfasst einen ringförmigen Körper der aus einem ersten Teil und einem zweiten Teil zusammengesetzt ist. In dem ringförmigen Körper befindet sich eine kreisförmige Laufbahn, auf der mehrere Kugeln in einer Flüssigkeit frei beweglich angeordnet sind. Die kreisförmige Laufbahn definiert die Auswuchtebene der Auswuchtvorrichtung.

Die US 5 142 936 A offenbart eine Auswuchtvorrichtung für rotierende Objekte, insbesondere zum Auswuchten von Fahrzeugrädern oder Wellen von rotierenden Maschinen. Ein zweilagiger, rohrförmiger Reifen definiert eine in einer Auswuchtebene angeordnete Kreisbahn, wobei mehrere Kugeln in einer Dämpfungsflüssigkeit frei beweglich angeordnet sind. Der zweilagige Ring wird derart an der rotierenden Achse angeordnet, dass die Auswuchtebene des Rings senkrecht zu der Rotationsachse steht. Die äußere Lage des Rings ist starr, um eine zufriedenstellende Befestigung an dem rotierenden Objekt zu ermöglichen, während die innere Lage des Rings unempfindlich gegenüber den Kugeln und der Dämpferflüssigkeit ausgestaltet ist.

Die US 2 405 404 A offenbart eine Auswuchtvorrichtung für eine Waschmaschine. An einer die Waschtrommel antreibenden Welle ist ein Ring befestigt. An dem Ring sind Pendelgewichte mithilfe von Bolzen angelenkt. Die Oszillationsfrequenz der Pendelgewichte unter Einwirkung der Zentrifugalkraft entspricht in etwa der Rotationsfrequenz, sodass die Pendelgewichte als Vibrationsabsorber arbeiten. An dem Ring sind außerdem Stifte angeordnet, um die Bewegung der Pendelgewichte während der Beschleunigung und des Abbremsens der Waschtrommel zu begrenzen.

Ausgehend von diesem Stand der Technik liegt der Erfindung die Aufgabe zugrunde, einen Orbitalschüttler mit einer Auswuchtvorrichtung zu schaffen, die ein automatisches und betriebssicheres Auswuchten mit reletiv geringem Aufwand ermöglicht. Zudem soll auch ein automatisches dynamisches Wuchten möglich sein.

Die Lösung dieser Aufgabe basiert auf dem Gedanken, zumindest die im Schüttelbetrieb entstehenden Fliehkräfte und/oder die daraus resultierenden Momente durch eine Auswuchtvorrichtung zum selbsttätigen Ausgleich unwuchtbedingter Kräfte und/oder Momente zu reduzieren. Bei dem selbsttätigen Ausgleich sind im Gegensatz zum automatischen aktiven Ausgleich für die Positionierung der Ausgleichsmassen keine Stellenergie, keine Sensorik und keine Regelung erforderlich. Hieraus ergibt sich gegenüber dem bekannten automatischen aktiven System eine deutlich verbesserte Betriebssicherheit, insbesondere weil die erfindungsgemäße Lösung vollständig auf elektronische und elektrotechnische Komponenten für den Unwucht-Ausgleich verzichtet.

Der erfindungsgemäße Orbitalschüttler ermöglicht durch den selbsttätigen Ausgleich unwuchtbedingter Kräfte und/oder Momente eine deutlich höhere Schüttelfrequenz und damit eine besser Sauerstoffversorgung und Durchmischung des Schüttelguts. Zugleich lässt sich der Verschleiß der Einzelteile des Orbitalschüttlers und die Geräuschentwicklung reduzieren. Schließlich bewirkt der selbsttätige Ausgleich unwuchtbedingter Kräfte und/oder Momente eine exaktere Einhaltung der kreisförmigen Bewegungsbahn des Schütteltisches.

Im Einzelnen wird die Aufgabe durch einen gattungsgemäßen Orbitalschüttler gelöst dessen Auswuchtvorrichtung zum selbsttätigen Ausgleich unwuchtbedingter Kräfte und/oder Momente folgende Merkmale aufweist:

- mindestens eine Auswuchtebene, die senkrecht zur Rotationsachse steht,
- mindestens eine in jeder Auswuchtebene konzentrisch um die Rotationsachse angeordnete Kreisbahn,
- mehrere auf jeder Kreisbahn frei beweglich angeordnete Ausgleichsmassen,
- eine Rotationsdämpfung die derart eingerichtet ist, dass bei einer Abweichung zwischen der Drehzahl der Ausgleichsmassen und der Drehzahl des Rotors um die Rotationsachse ein Moment auf die Ausgleichsmassen wirkt,
- ein Führungssystem dass derart eingerichtet ist, dass es ausschließlich eine Bewegung des Rotors innerhalb einer Ebene, die senkrecht zur Rotationsachse steht und /oder ein Kippen des Rotors um zwei rechtwinklig zueinander stehende Achsen, die innerhalb einer senkrecht zur Rotationsachse stehenden Ebene liegen, zulässt.

Die Ausgleichsmassen sind erforderlich, um die unwuchtbedingten Kräfte und/oder Momente auszugleichen. Damit sowohl der Betrag als auch die Richtung der Ausgleichskraft bzw. des Ausgleichsmoments der wirkenden Unwuchtkraft bzw. den Unwuchtmomenet entsprechen, sind mindestens zwei Ausgleichsmassen erforderlich. Die Ausgleichsmassen können beispielsweise Kugeln, Walzen, Pendel, aber auch Flüssigkeiten sein.

Die Ausgleichsmassen müssen über einen Freiheitsgrad in der Bewegung verfügen, um sich während des Wuchtens so anzuordnen, dass sie die jeweile Unwucht ausgleichen. Dieser Freiheitgrad wird dadurch ermöglicht, dass jede Ausgleichsmasse auf einer konzentrisch um die Rotationsachse des Rotors angeordneten Kreisbahn zwangsgeführt, jedoch in Richtung der Kreisbahn freibeweglich angeordnet ist.

Die Rotationsdämpfung bewirkt, dass bei einem Drehzahlunterschied zwischen dem Rotor und den Ausgleichsmassen ein Moment auf die Ausgleichsmassen wirkt, das dafür sorgt, dass die Drehzahl zwischen Rotor und den Ausgleichsmassen angeglichen wird.

Schließlich ist für die selbsttätige Positionierung der Ausgleichsmassen ein Führungssystems für den Rotor erforderlich. Sofern ausschließlich unwuchtbedingte Fliehkräfte ausgeglichen werden, genügt es, wenn das Führungssystem für eine freie Bewegung des Rotors innerhalb einer Ebene, die senkrecht zur Rotationsachse steht, eingerichtet ist. Sofern zusätzlich Unwuchtmomente ausgeglichen werden, ist zusätzlich ein Rundführungssystem vorzusehen, das für ein Kippen des Rotors in zwei rechtwinklig zueinander stehende Achsen innerhalb einer Ebene eingerichtet ist, die senkrecht zur Rotationsachse steht.

Bei normaler Betriebsdrehzahl wird der Rotor des Orbitalschüttlers im überkritischen Bereich betrieben. Dadurch ensteht ein Phasenwinkel zwischen anregender Kraft und der resultierenden Bewegung des Orbitalschüttlers von annähernd 180 Grad. Zeigt also die wirksame Unwucht und damit die Unwuchtkraft in die positive X-Richtung, wird der an dem Linearführungssystem angeordnete Rotor und der daran angelenkte Schütteltisch in die negative X-Richtung ausgelenkt. Diese resultiernede Bewegung des Rotors ermöglicht das Führungssystem. Werden zusätzlich Unwuchtmomente kompensiert, ermöglicht das Rundführungssystem die erforderliche entgegengesetzte Auslenkung des Rotors und des daran angelenkten Schütteltischs.

Sofern in einer Ausgestaltung der Erfindung der Antrieb als Elektromotor mit einem Stator und dem Rotor als beweglichen Teil ausgestaltet ist, lässt sich eine kompakte Bauweise des Orbitalschüttlers erreichen. Insbesondere ist keine Übertragung der Drehbewegung zwischen dem Antrieb und dem um die Rotationsachse drehenden Rotor beispielsweise über ein Zugmitteltrieb erforderlich.

Der Rotor des Antriebs ist vorzugsweise als Außenläufer mit einer Vielzahl von Permanentmagneten ausgerüstet und wird durch mehrere Elektromagnete des Stators angetrieben. Der Antrieb ist vorzugsweise an einem Antriebsgestell befestigt. Das Antriebsgestell kann beispielsweise als Platte ausgeführt sein, an der der Stator des Antriebs befestigt ist. Der Rotor ist insbesondere über Wälzlager mit dem Antriebsgestell verbunden.

Das Drehgelenk, das den Rotor und den Schütteltisch drehbeweglich um die Gelenkachse miteinander verbindet, die mit einem Parallelversatz zu der Rotationsachse verläuft, weist in vorteilhafter Ausgestaltung der Erfindung einen die Gelenkachse definierenden, exzentrisch zur Rotationsachse angeordneten Zapfen und ein den Zapfen drehbar aufnehmendes Lager auf. Zur Reduktion der Reibung in dem Drehgelenk und damit der Antriebsleistung ist das den Zapfen aufnehmende Lager vorzugsweise als Wälzlager ausgeführt.

Um den Durchmesser der Kreisbahn des Schütteltisches abhängig von der Beladung zu verändern, ist in einer vorteilhaften Ausgestaltung der Erfindung der Parallelversatz, auch als Exzentrizität bezeichnet, zwischen der Rotationsachse des Rotors und der Gelenkachse des Drehgelenks einstellbar. Der Parallelversatz zwischen den Achsen kann durch ein Versetzen des Drehgelenkzapfens geändert werden. Insbesondere wenn der Rotor als Außenläufer ausgebildet ist, lässt sich der Zapfen problemlos auf der nach oben weisenden Stirnseite des Außenläufers mit unterschiedlichem Parallelversatz zur Rotationsachse befestigen.

Um den Freiheitsgrad jeder Ausgleichsmasse auf eine Kreisbahn in der Auswuchtebene zu beschränken, ist an dem Rotor entlang jeder Kreisbahn eine Kreisführung angeordnet, die zur Führung der Ausgleichsmassen auf der Kreisbahn eingerichtet ist. Eine kompakte und günstige Bauweise für eine derartige Kreisführung wird dadurch erreicht, dass die Kreisführung einen ringförmigen Hohlraum aufweist, in dem die insbesondere als Walzkörper ausgestalteten Ausgleichsmassen sich bewegen. Die erforderliche Rotationsdämpfung für die insbesondere kugelförmigen Ausgleichsmassen lässt sich bei dieser Ausführungsform besonders einfach dadurch realisieren, dass der ringförmige Hohlraum mit einem Fluid, insbesondere einem Öl, gefüllt ist. Die Rotationdämpfung lässt sich durch Einfüllen von Fluiden unterschiedlicher Viskosität hinsichtlich ihrer Dämpfungseigenschaften problemlos anpassen, benötigt keinen zusätzlichen Bauraum und ist zudem preiswert ausführbar.

Zur Verbesserung des Wuchtergebnisses sind in einer Ausgestaltung der Erfindung in jeder Auswuchtebene mindestens zwei ringförmige Hohlräume mit unterschiedlich großen Durchmessern konzentrisch um die Rotationsachse angeordnet, wobei die ringförmigen Hohlräume mit Fluiden, insbesondere Öl unterschiedlicher Viskosität gefüllt sind. Der mit höher viskosem Fluid gefüllte Ringkanal wird für das Grobauswuchten und der mit dem Fluid geringerer Viskosität gefüllte Ringkanal für das Feinauswuchten genutzt.

Eine weitere Verbesserung des Wuchtergebnisses lässt sich erreichen, wenn jede Kreisführung in mindestens zwei teilkreisförmige Segmente aufgeteilt ist und in jedem Segment mindestens eine der Ausgleichsmassen frei beweglich auf der Kreisbahn angeordnet ist. Die Segmentierung verhindert die Bildung von sich berührenden Kugelkollektiven, die die Positionierung der Kugeln auf der Kreisbahn, insbesondere in dem ringförmigen Hohlraum behindern.

Um die Ausgleichsmassen frei beweglich auf einer Kreisbahn zu führen, ist es in einer alternativen Ausführungsform der Erfindung vorgesehen, dass die Ausgleichsmassen als Pendel ausgebildet sind, wobei jedes Pendel außerhalb seines Massenschwerpunkts drehbar um die Rotationsachse gelagert ist. Durch den kurzen Reibungshebelarm, wird ein gutes Wuchtergebnis erreicht. Die erforderliche Rotationsdämpfung zwischen dem Rotor und jedem Pendel kann als Wirbelstromkupplung und/oder hydraulicher Rotationsdämpfer ausgestaltet sein. Die Wirbelstromkupplung beruht auf dem Prinzip der Relativbewegung zwischen einem metallischen, elektrisch leitenden Körper in einem inhomogenen äußeren Magnetfeld. Die Relativbewegung induziert Wirbelströme in dem metallischen Körper, die ihrerseits eigene, dem äußeren Magnetfeld entgegengesetzte Magnetfelder erzeugen, die die Rotationsdämpfung bewirken. Zur Ausführung der Rotationsdämpfung muss daher der Rotor oder das Pendel aus einem elektrisch leitfähigen Werkstoff bestehen und das jeweils andere Teilals als Dauer- oder Elektromagnet ausgeführt sein. Sofern das Magnetfeld elektrisch erzeugt wird, ist eine Einstellung der Dämpfung möglich. Zusätzlich oder alternativ kann zwischen dem Rotor und den beiden Pendeln jeweils ein hydraulischer Rotationsdämpfer angeordnet sein.

Das zum Ausgleich der unwuchtbedingten Kräfte erforderliche Führungssystem ist in vorteilhafter Ausgestaltung der Erfindung ein zweiachsiges Linearführungssystem, auch als X-Y-Tisch oder als Kreuztisch bezeichnet, das für eine translatorische Bewegung des Rotors und damit der Rotorachse in zwei rechtwinklig zueinander stehenden Achsen (X-Achse / Y-Achse) innerhalb der senkrecht zur Rotationsachse stehenden Ebene eingerichtet ist. Das Linearführungssystem verbindet als Führungselemente vorzugsweise das Antriebsgestell bzw. unmittelbar den Stator mit dem Maschinengestell des Orbitalschüttlers. Das Maschinengestell des Orbitalschüttlers nimmt alle Kräfte und Momente, die im Orbitalschüttler auftreten, auf und verbindet den Orbitalschüttler mit der Umgebung. In der Regel steht der Orbitalschüttler auf mehreren Füßen, die häufig Elastomer-Bestandteile aufweisen, um einerseits eine bessere Haftung des Orbitalschüttlers gegen Verrutschen und andererseits eine gewisse Schwingungsisolation zu gewährleisten.

Der Vorteil des zweiachsigen Linarführungssystems besteht in der kompakten Bauform und der hohen Lastaufnahme. Durch die bevorzugte Ausführung des Linearführungssystems mit Gleitlager wird zudem eine wartungsfreie und durch Reibung gedämpfte Bewegung des Linearführungssystems erreicht. Die statische Reibung unterdrückt zudem vorhandene Rechtsschwingungen.

Sofern der Verschiebewiderstand des Linearführungssystems in beiden Achsrichtungen einstellbar ist, ist eine Abstimmung des Bewegungsverhaltens des Führungssystems möglich. Ist der Verschiebewiderstand zu groß, werden auch die in das Maschinengestell eingeleiteten Kräfte zu groß. Durch einen zu geringen Verschiebewiderstand werden die Bewegungen des Linearführungssystems während des Wuchtens zu wenig gedämpft und die Restschwingungen nicht hinreichend unterdrückt.

Um den stillstehenden Schütteltisch automatisiert beladen zu können, bewegt in einer Ausgestaltung der Erfindung ein Rückstellelement das Antriebsgestell und dadurch die Rotationsachse des Rotors in eine stets gleiche Ausgangsstellung.

Zur Redukton der auf jeder Kreisbahn frei beweglich angeordneten Ausgleichsmassen kann zusätzlich zum Ausgleich unwuchtbedingter Kräfte und/oder Momente an dem Rotor mindestens ein ortsfestes Ausgleichsgewicht angeordnet sein.

Um zusätzlich zu den unwuchtbedingten Kräften auch die unwuchtbedingten Momente auszugleichen, weist der Orbitalschüttler mindestens zwei in Richtung der Rotationsachse versetzt zueinander angeordnete Auswuchtebenen auf. Des Weiteren muss zum Ausgleich der unwuchtbedingten Momente zwingend das eingangs erwähnte Rundführungssystem vorhanden sein, dass für ein Kippen des Rotors um zwei rechtwinklig zueinander stehende Achsen innerhalb einer Ebene, die senkrecht zur Rotationsachse stets, eingerichtet ist. Sofern ausschließlich Unwuchtmomente kompensiert werden sollen, genügt es ein Rundführungssystem und eine einzige Auswuchtebene vorzusehen.

Um während des Wuchtens die durch das Linearführungssystem und/oder das Rundführungssystem zugelassene Bewegung des Rotors zu begrenzen, weisen die beiden Führungssysteme Dämpfer auf. Die Dämpfung kann durch beispielsweise durch Reibung, Wirbelströme oder einen Fluiddämpfer realisiert werden.

Nachfolgend wird die Erfindung anhand mehrerer Ausführungsbeispiele näher erläutert. Es zeigen:

**Fig. 1:** eine schematische Darstellung eines Ausführungsbeispiels der Erfindung mit selbsttätigem Ausgleich der Unwuchtkraft,

**Fig. 2:** die Seitenansicht des Ausführungsbeispiels nach Figur 1,

**Fig. 3a:** eine Draufsicht auf das Ausführungsbeispiel nach Figur 1,

**Fig. 3b:** ein Krafteck der beim Wuchten entstehenden Kräfte gemäß der Fig. 3a,

**Fig. 4:** eine schematische Darstellung eines Ausführungsbeispiels der Erfindung mit selbsttätigem Ausgleich der Unwuchtkraft und des Unwuchtmoments,

**Fig. 5:** eine perspektivische Darstellung des in Fig. 4 dargestellten Ausführungsbeispiels sowie

**Fig. 6:** eine schematische Darstellung einer Anordnung der Ausgleichmassen als Pendel.

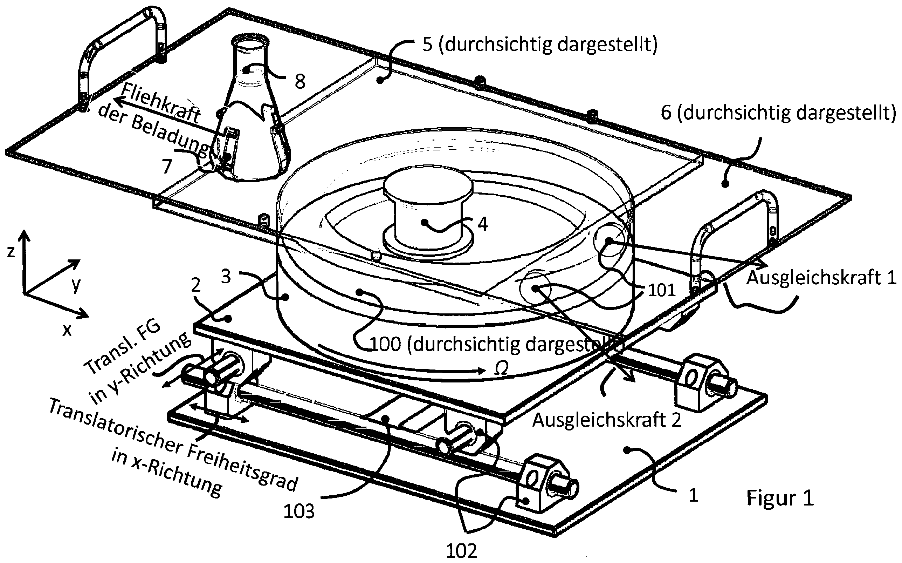

Ein erstes Ausführungsbeispiel eines Orbitalschüttlers mit selbsttätigem Ausgleich der Unwuchtkraft ist in den Zeichnungen Fig. 1, 2, 3a und 3b dargestellt und wird im Folgenden näher beschrieben:
Ein Maschinengestell (1) in Form einer Grundplatte ist über ein Linearführungssystem (102, 103) mit einem Antriebsgestell (2) in Form einer Motorplatte relativ zueinander beweglich verbunden. Ein Antrieb ist auf dem Antriebsgestell (2) angeordnet. Der Antrieb treibt einen drehbar gelagerten Rotor (3) an. Dieser Rotor (3) ist insbesondere der Läufer - im Ausführungsbeispiel der Außenläufer- eines Elektromotors.

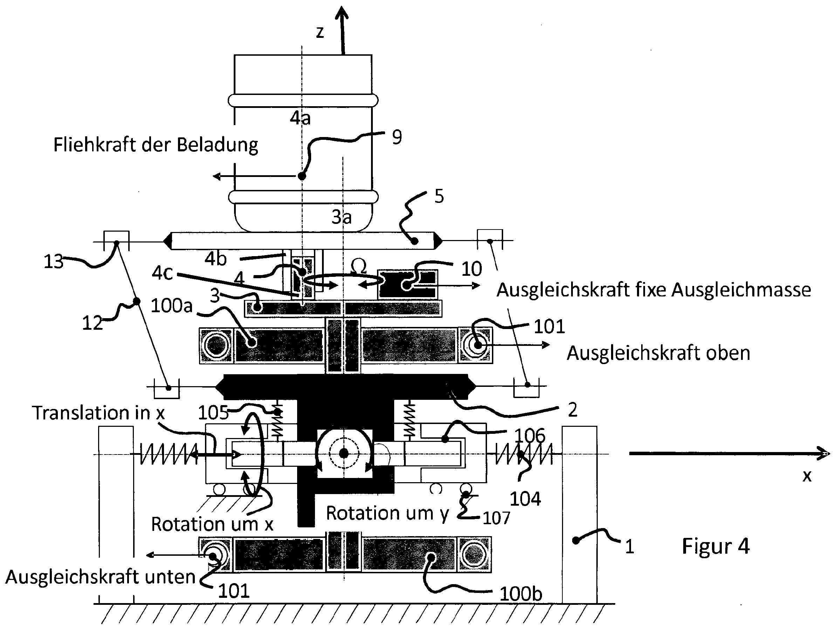

Exzentrisch mit einem Parallelversatz (e) zu der Rotationsachse (3a) des Rotors (3) ist über ein Drehgelenk (4) ein Schütteltisch (5) drehbeweglich mit dem Rotor (3) verbunden. Das Drehgelenk (4) weist einen die Gelenkachse (4a) definierenden, exzentrisch zur Rotationsachse (3a) angeordneten Zapfen (4c) und ein den Zapfen (4c) drehbar aufnehmendes Lager (4b) auf (vgl. Figur 4), das an der Unterseite des Schütteltisches (5) befestigt ist. Das Drehgelenk (4) ermöglicht eine relative Drehung um die Gelenkachse (4a) zwischen dem Rotor (3) und dem Schütteltisch (5) .

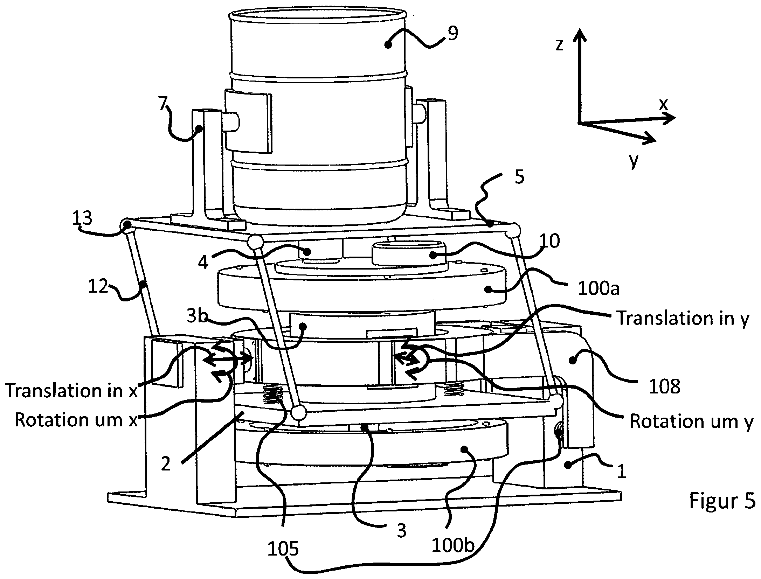

Gleichzeitig wird eine Drehung des Schütteltischs (5) um die Hochachse durch eine Führung des Schütteltischs (5) verhindert. Die Führung bewirkt, dass der Schütteltisch (5) während der orbitalen Bewegung seine Orientierung beibehält und dadurch alle Punkte auf der Oberfläche des Schütteltischs (5) bei der Bewegung die gleiche Kreisbahn beschreiben, deren Durchmesser dem zweifachen Parallelversatz (e) zwischen der Rotationsachse (3a) und der Gelenkachse (4a) entspricht. Diese Sperrung der Drehung des Schütteltischs (5) um die Hochachse, nachfolgend auch als Rotationssperre bezeichnet, kann durch unterschiedliche Führungen, die dem auf dem Gebiet der Schüttler tätigen Fachmann geläufig sind, erreicht werden und sind deshalb der Übersichtlichkeit halber in den Figuren 1, 2, 3a nicht dargestellt sind, jedoch bei dem Ausführungsbeispiel nach den Figuren 4 und 5 beispielhaft dargestellt.

Auf dem Schütteltisch (5) kann ein Tablar (6) befestigt werden, auf dem wiederum die variable Beladung. Diese kann jedoch auch direkt an dem Schütteltisch (5) angebracht sein.

In Fig. 1, 2, 3a ist die variable Beladung beispielsweise als Halterung (7) und Erlenmeyerkolben (8) zur Aufnahme des Schüttelgutes dargestellt. Die variable Beladung beschreibt eine durch den Parallelversatz der exzentrischen Gelenkachse (4a) zu der Rotationsachse (3a) definierte Kreisbahn ohne sich dabei zu drehen. Durch die Bewegung der variablen Beladung entsteht eine Fliehkraft, die das gesamte System zu Schwingungen anregt. Der Betrag der Fliehkraft $F$ hängt von der Masse der Beladung $m$, dem Schütteldurchmesser $d = 2 e$ und der Winkelgeschwindigkeit $\Omega$ ab. Alle drei Parameter können vom Anwender des Orbitalschüttlers in gewissen Grenzen variiert werden, sodass die Fliehkraft veränderlich ist. Es gilt:

$$F = m \cdot \frac{d}{2} \cdot \Omega^2 = m \cdot e \cdot \Omega^2$$

Damit der selbsttätige Ausgleichmechanismus zum Ausgleich der Unwuchtkraft funktionsfähig ist, ist der angetriebene Rotor (3) zusätzlich in einer Ebene, die senkrecht zu seiner Rotationsachse (3a) steht, mittels des Linearführungssystems (102, 103) beweglich gelagert. Daraus ergeben sich zwei weitere Freiheitsgrade und zwar die translatorische Bewegung in x- und y-Richtung in der Ebene senkrecht zur Drehachse der Unwucht. Optional kann diese Bewegungsmöglichkeit durch eine rückstellende und/oder dämpfende Kraft beeinflusst werden. Die Federsteifigkeit der rückstellenden Kraft eines Rückstellelementes muss so niedrig gewählt sein, dass die Antriebswinkelgeschwindigkeit $\Omega$, für alle für den normalen Schüttelbetrieb notwendigen Drehzahlen, im überkritischen Bereich liegt (Sie muss größer sein, als die Eigenkreisfrequenzen $\omega_o$ der Bewegung des Systems: $\Omega > \omega_o$).

Wird keine rückstellende Kraft verwendet, so entspricht dies einer Federsteifigkeit und damit auch einer Eigenkreisfrequenz $\omega_o$ von Null. Somit sind alle Betriebsdrehzahlen $\Omega$ größer als die Eigenfrequenz $\omega_o$ der Bewegung und es ist stets ein überkritischer Betrieb gewährleistet. Jedoch steht das Antriebsgestell (2) in diesem Fall nach dem Auswuchten nicht zwangsläufig immer in der gleichen Position. Über die Dämpfung des Linearführungssystems (102, 103) lässt sich die Bewegung des Linearführungssystems (102, 103) beim Anfahren und evtl. beim Durchfahren der Eigenfrequenz gering halten. Die Dämpfung kann durch Reibung in den Linearführungen des Linearführungssystems und/ oder durch zusätzliche Bauteile bewirkt werden (zum Beispiel Fluiddämpfer oder Wirbelstrom Dämpfer).

Außerdem kann das Linearführungssystem (102, 103) mechanische Anschläge aufweisen, die die maximale Auslenkung in Richtung der X- und Y-Achse in der senkrecht zur Rotationsachse stehenden Ebene beschränken. In Fig. 1, 2, 3a sind weder Anschläge noch federnde und/oder dämpfende Elemente dargestellt.

Der oben erwähnte überkritische Betrieb gewährleistet einen Phasenwinkel zwischen der anregenden Unwuchtkraft und der Auslenkung des Systems von über 90° (idealer Weise 180°) in der senkrecht zur Rotationsachse stehenden Ebene. Wirkt also eine resultierende Restunwuchtkraft in die eine Richtung, so ist das System in die entgegengesetzte Richtung ausgelenkt.

Die Auswuchtvorrichtung umfasst weiterhin mindestens zwei Ausgleichsmassen (101, 110) deren Massenschwerpunkte sich konzentrisch auf einer Kreisbahn um die Rotationsachse (3a) des Rotors (3) bewegen. Die Bewegung auf der Kreisbahn ist zum einen durch eine Lagerung (111) der als Pendel ausgeführten Ausgleichsmassen (110) au-

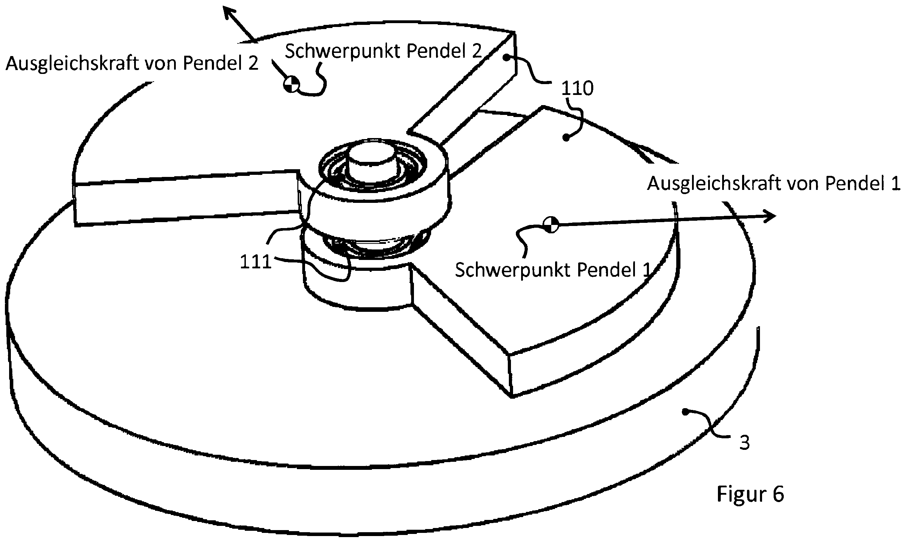

ßerhalb von deren Masseschwerpunkten möglich (Fig. 6) zum andern kann durch Ausgleichsmassen (101) in Form von Wälzkörpern (kugel- oder zylinderförmig) und/oder Gleitkörpern, die entlang einer Kreisführung auf einer oder mehrerer Kreisbahn/en abrollen und/oder entlang gleiten erreicht werden. Als Kreisführung dient bei dem Ausführungsbeispiel nach den Figuren 1,2, 3a ein Ringkanal (100), in dem die als Kugeln ausgeführten Ausgleichsmassen (101) abrollen können. Die Ausgleichsmassen (101) müssen sich so bewegen können, dass sie ihre Position relativ zur variablen Beladung (7,8) verändern können.

Gleichzeitig muss sichergestellt sein, dass die Ausgleichsmassen (101) im ausgewuchteten Zustand mit der gleichen Drehzahl umlaufen wie die variable Beladung (7,8). Dies wird durch eine geschwindigkeitsabhängige Rotationsdämpfung zwischen dem Rotor (3) und den Ausgleichsmassen (101) ermöglicht. Dabei ist mit Rotationsdämpfung ein Mittel gemeint, das in Abhängigkeit einer Relativdrehzahl zwischen den Ausgleichsmassen (101) und dem Rotor (3) ein gerichtetes Moment erzeugt, das die Relativdrehzahl reduziert. Als Rotationsdämpfung ist der Ringkanal (100), in dem sich die Ausgleichsmassen (101) bewegen, mit einem Fluid gefüllt. Bei der Verwendung von Pendeln (110) kann als Rotationsdämpfung eine Wirbelstromkupplung zum Einsatz gelangen.

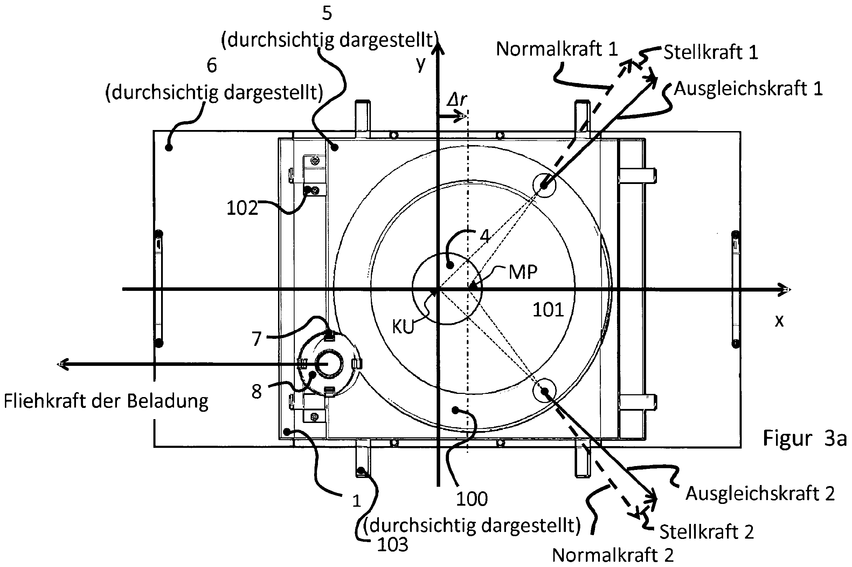

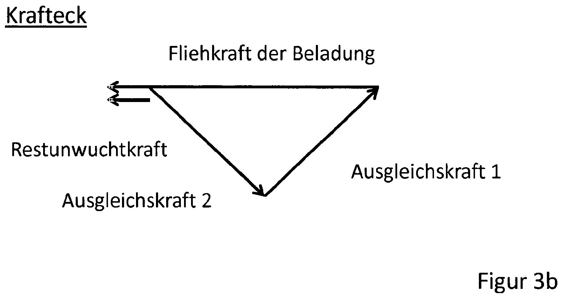

Ist der Orbitalschüttler nicht ausgewuchtet bewirkt die Unwuchtkraft eine Auslenkung des Antriebsgestells (2) in einer Ebene senkrecht zur Rotationsachse (3a), die der Kraft um annähernd 180° hinterher eilt. Da die Ausgleichsmassen (101) in diesem Fall nicht mehr um den Mittelpunkt (MP) ihrer Lagerung bzw. des Ringkanals drehen (siehe Fig. 3a), sondern um den unausgelenkten Mittelpunkt, hier Koordinatenursprung genannt (KU), haben die auf sie wirkenden Fliehkräfte auch eine zur Kreisbahn tangentiale, als Stellkraft 1, 2 in Figur 3a bezeichnete Komponente. Durch die Lagerung der Pendel (111) bzw. den Ringkanal (100) können (abgesehen von der Reibung) aber nur Kräfte in die Richtung normal zur Kreisbahn aufgenommen werden, sodass die tangentiale Kraft (Stellkräfte 1, 2) eine relative Positionsänderung der Ausgleichsmassen (101 bzw. 110) zur Gelenkachse (4a) erzeugt. Sobald die Ausgleichsmassen (101 bzw. 110) eine Position erreicht haben, die die ursprüngliche Unwuchtkraft ausgleicht, sind die resultierende Unwuchtkraft und damit auch die radiale Auslenkung $\Delta r$ des Motorgestells (2) gleich Null. Die Punkte MP und KU fallen dann zusammen. Die Ausgleichsmassen (101 bzw. 110) behalten im Betrieb solange ihre Position bis der Wuchtzustand geändert wird. Für ein optimales Wuchtergebnis ist die Reibung der Ausgleichsmassen in der Kreisführung minimiert, da diese die optimale Anordnung der Ausgleichsmassen negativ beeinflusst.

Das in dem Ausführungsbeispiel als Linearführungssystem (102, 103) ausgeführte Führungssystem muss zum einen die gewünschte translatorische Bewegung des Rotors (3) in einer Ebene senkrecht zu Rotationsachse (3a) zulassen und zum anderen alle andern Bewegungen sperren. Außerdem nimmt das Führungssystem die Gewichtskräfte auf. Neben dem dargestellten Linearführungssystem mit zwei gekreuzten Lineargleitlagerführungen können auch Linearwälzlagerführungen eingesetzt werden.

Das Führungssystem für den Rotor (3) kann auch aus federelastischen Elementen aufgebaut werden. Diese müssen in die Bewegungsrichtung in der Ebene senkrecht zu Rotationsachse (3a) eine niedrige Federsteifigkeit aufweisen, damit ein überkritischer Betrieb gewährleistet werden kann und in die anderen Richtungen möglichst steif sein (Sperrung der Bewegung und Aufnahme der Kräfte und Momente).

Ein alternative Ausführungsform eines Führungssystems, das nur die gewünschten Bewegungen in einer Ebene senkrecht zu Rotationsachse (3a) zulässt, kann beispielsweise mittels mittels einer Schmidt- oder Kärger-Kupplung realisiert werden.

Für einen zusätzlichen Ausgleich des durch die Unwuchtkraft erzeugten Moments, muss der Rotor (3) und dessen Drehachse (3a) neben der Bewegungsmöglichkeit innerhalb der Ebene auch um zwei rechtwinklig zueinander stehende Achsen innerhalb einer Ebene senkrecht zur Rotationsachse kippen können (vergleiche Fig. 4 und Fig. 5). Das in Fig. 5 dargestellte Führungssystem umfasst ein Zwischenglied (108), das mit dem Maschinengestell (1) so verbunden ist, dass es sich entlang bzw. um eine x-Achse in der Ebene senkrecht zur Rotationsachse (3a) translatorisch und rotatorisch bewegen kann. Dies ist zum Beispiel durch eine Kombination von Dreh-(106) und Schubgelenken (107) möglich. An diesem Zwischenglied (108) ist wiederum der Stator des Motors so angebracht, dass er sich entlang bzw. um die y-Achse in der Ebene senkrecht zur Rotationsachse (3a) bewegen kann. Durch diese serielle Anordnung kann der Stator des Motors sich in Summe um die x- und y-Achse drehen und entlang dieser Achsen frei verschoben werden. Er hat also insgesamt vier Freiheitsgrade.

Um die Unwuchtmomente ausgleichen zu können, sind außerdem in mindestens einer weiteren Auswuchtebene mindestens zwei Ausgleichsmassen (101) nötig, die auf einer Kreisbahn in der weiteren Auswuchtebene geführt sind. Das Ausführungsbeispiel nach den Figuren 4, 5 verfügt über zwei in Richtung der Rotationsachse (3a) versetzte Ringkanäle (100a und 100b) in denen die als Kugeln ausgeführten Ausgleichsmassen (101) umlaufen.

Um den Rotor nach Beendigung des Schüttelbetriebs in eine stets gleiche Ausgangslage zu bringen, kann auch bei dieser Ausführungsform mit Hilfe von Rückstellelementen, insbesondere mit Hilfe von in Figur 4 dargestellten Federn (104 und 105) eine Rückstellung der Verkippung und der Verschiebung bewirkt werden.

Wie bei einem Orbitalschüttler mit reinem Unwuchtkraftausgleich können die Bewegungen gedämpft werden, um große Ausschläge beim Durchfahren der Eigenfrequenz und beim Anfahren zur vermeiden.

Auch in Fig. 4 und Fig. 5 stellt die Welle des Motors den angetriebenen Rotor (3) da, der hier jedoch als Innenläufer ausgeführt ist. An dem Rotor (3) sind die beiden Ringkanäle (100a, 100b) befestigt, sodass sie sich mit dem Rotor drehen. In den Ringkanälen (100a, 100b) befindet sich Öl als Rotationsdämpfung für die Ausgleichsmassen (101) in Form der Kugeln. Der Schütteltisch (5) ist mittels eines exzentrisch zur Rotationsachse (3a) an der nach außen weisenden Stirnseite des Rotors (3) angeordneten Drehgelenks (4) mit dem Rotor (3) verbunden.

Als Führung bzw. Rotationssperre für den Schütteltisch (5) sind mehrere Stangen (12) mit je einem Kardangelenk (13) an den beiden Enden vorgesehen. Eines der Kardangelenke (13) ist jeweils mit dem Schütteltisch (5) und das andere mit dem Antriebsgestell (2) verbunden, an dem der Antrieb angeordnet ist. Die Führung bzw. Rotationssperre bewirkt, dass der Schütteltisch (5) eine Kreisbahn ohne Änderung der Orientierung beschreibt. Als Beladung befindet sich auf dem Schütteltisch (5) ein Fass (9) mit dem Schüttelgut.

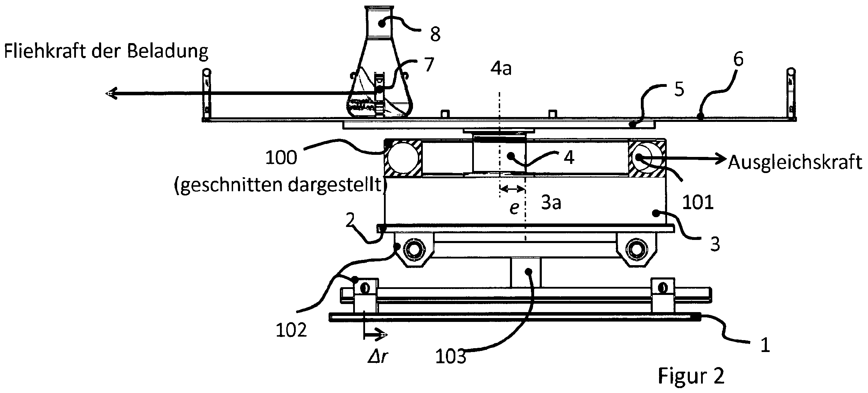

Solange nun ein Unwuchtmoment wirkt, führt dies zu einem Kippen der Rotationsachse (3a) um die x- und y-Achse. Da die beiden Auswuchtebenen mit den Ringkanälen (100a, 100b)) einen vertikalen Abstand zu der x- und y-Achse aufweisen bewegt sich der Mittelpunkt der Ringkanäle (100a, 100b) wieder auf einer Kreisbahn um den Koordinatenursprung (KU). Auch hier muss die zughörige Eigenfrequenz des Systems so gewählt werden, dass ein Phasenverzug von über 90° erreicht wird. Dies ist über eine möglichst geringe Eigenfrequenz möglich. In diesen Fall führt die Auslenkung des Mittelpunkts (MP) der Ringkanäle (100a und 100b) zu Stellkräften auf die Ausgleichsmassen, die solange wirken bis die Unwucht ausgeglichen ist (analog zu den in Figuren 2, 3a dargestellten Kräften für den reinen Unwuchtkraftausgleich).

In der Ausführungsform nach Fig. 4 wurde zudem eine fixe mit dem Rotor (3) verbundene Ausgleichsmasse (10) verwendet. Diese kann die bei Variation der Beladung konstante Unwucht, verursacht durch den Schütteltisch (5) und das Drehgelenk (4) sowie mögliche weitere Bauteile ausgleichen, sodass nur die variable Beladung durch die Ausgleichsmassen ausgewuchtet werden muss. Zudem kann sie auch zusätzlich eine typische Beladung, insbesondere die Hälfte der maximalen Beladung ausgleichen, wodurch weniger Ausgleichsmassen im selbsttätigen System benötigt werden.

## Bezugszeichenliste

| Nr. | Bezeichnung | Nr. | Bezeichnung |
|---|---|---|---|
| 1 | Maschinengestell | 100 | Ringkanal |
| 2 | Antriebsgestell | 100a | oberer Ringkanal |
| 3 | Rotor | 100b | unterer Ringkanal |
| 3a | Rotationsachse | 101 | Ausgleichsmasse (Kugel) |
| 3b | Stator | 102 | Führungssystem (Gleitbuchsen) |
| 4 | Drehgelenk | 103 | Führungssystem (Achsenkreuz) |
| 4a | Gelenkachse | 104 | Feder für translatorische Bewegung |
| 4b | Zapfen | 105 | Feder für rotatorische Bewegung |
| 4c | Lager | 106 | Rundführung |
| 5 | Schütteltisch | 107 | translatorische Lagerung |
| 6 | Tablar | 108 | Zwischenglied |
| 7 | Halterung | 109 | - |
| 8 | Erlenmeyerkolben | 110 | Ausgleichsmasse (Pendel) |
| 9 | Schüttelgefäß | 111 | Lagerung |
| 10 | ortsfeste Ausgleichsmasse | | |
| 11 | | | |
| 12 | Stange | | |
| 13 | Kardangelenk | | |

## Patentansprüche

1. Orbitalschüttler umfassend:

- einen Schütteltisch (5) mit einer Oberfläche zur Aufnahme einer Beladung (6, 7, 8, 9),
- einen um eine Rotationsachse (3a) drehbaren Rotor (3),
- einen Antrieb der zur Erzeugung der Drehbewegung des Rotors (3) eingerichtet ist,
- ein Drehgelenk (4), das den Rotor (3) und den Schütteltisch (5) drehbeweglich um eine Gelenkachse (4a) miteinander verbindet, die mit einem Parallelversatz (e) zu der Rotationsachse (3a) verläuft,
- eine Führung (12, 13), die derart eingerichtet ist, das sämtliche Punkte der Oberfläche des Schütteltisches (5) bei sich drehendem Rotor (3) eine Kreisbahn mit übereinstimmendem Durchmesser beschreiben, der dem zweifachen Parallelversatz entspricht,

**gekennzeichnet durch** eine Auswuchtvorrichtung zum selbsttätigen Ausgleich unwuchtbedingter Kräfte und/oder Momente umfassend:

- mindestens eine Auswuchtebene, die senkrecht zur Rotationsachse (3a) steht,
- mindestens eine in jeder Auswuchtebene konzentrisch um die Rotationsachse (3a) angeordnete Kreisbahn,
- mehrere auf jeder Kreisbahn frei beweglich angeordnete Ausgleichsmassen (101/110),
- eine Rotationsdämpfung die derart eingerichtet ist, dass bei einer Abweichung zwischen der Drehzahl der Ausgleichsmassen (101/110) und der Drehzahl des Rotors (3) um die Rotationsachse (3a) ein Moment auf die Ausgleichsmassen (101/110) wirkt,
- ein Führungssystem (102, 103, 106) das derart eingerichtet ist, dass es ausschließlich eine translatorische Bewegung des Rotors (3) innerhalb einer Ebene, die senkrecht zur Rotationsachse (3a) steht und /oder ein Kippen des Rotors um zwei rechtwinklig zueinander stehende Achsen, die innerhalb einer senkrecht zur Rotationsachse stehenden Ebene liegen, zulässt.

2. Orbitalschüttler nach Anspruch 1, **dadurch gekennzeichnet, dass** der Antrieb als Elektromotor mit einem Stator und dem Rotor (3) als beweglichem Teil ausgestaltet ist.

3. Orbitalschüttler nach Anspruch 2, **dadurch gekennzeichnet, dass** der Antrieb an einem Antriebsgestell (2) befestigt ist.

4. Orbitalschüttler nach einem der Ansprüche 1 bis 3, **dadurch gekennzeichnet, dass** das Drehgelenk (4) einen die Gelenkachse (4a) definierenden, exzentrisch zur Rotationsachse (3a) angeordneten Zapfen (4c) und ein den Zapfen (4c) drehbar aufnehmendes Lager (4b) aufweist.

5. Orbitalschüttler nach einem der Ansprüche 1 bis 3, **dadurch gekennzeichnet, dass** der Parallelversatz (e) zwischen der Rotationsachse (3a) und der Gelenkachse (4a) einstellbar ist.

6. Orbitalschüttler nach einem der Ansprüche 1 bis 5, **dadurch gekennzeichnet, dass** an dem Rotor (3) entlang jeder Kreisbahn eine Kreisführung angeordnet ist, die zur Führung der Ausgleichsmassen (101,110) auf der Kreisbahn eingerichtet ist.

7. Orbitalschüttler nach Anspruch 6, **dadurch gekennzeichnet, dass** die Kreisführung einen ringförmigen Hohlraum (100a, 100b) aufweist.

8. Orbitalschüttler nach einem der Ansprüche 1 bis 7, **dadurch gekennzeichnet, dass** die Ausgleichsmassen (101) als Wälzkörper ausgestaltet sind.

9. Orbitalschüttler nach Anspruch 7 oder Anspruch 7 und 8, **dadurch gekennzeichnet, dass** der ringförmige Hohlraum (100a, 100b) mit einem Fluid als Rotationsdämpfung gefüllt ist.

10. Orbitalschüttler nach Anspruch 9, **dadurch gekennzeichnet, dass** in jeder Auswuchtebene mindestens zwei ringförmige Hohlräume (100a bzw. 100b) mit unterschiedlich großen Durchmessern konzentrisch um die Rotationsachse (3a) angeordnet sind, wobei die ringförmigen Hohlräume (100a bzw. 100b), mit Fluiden unterschiedlicher Viskosität gefüllt sind.

11. Orbitalschüttler nach einem der Ansprüche 6 bis 10, **dadurch gekennzeichnet, dass** jede Kreisführung in mindestens zwei teilkreisförmige Segmente aufgeteilt ist und in jedem Segment mindestens eine der Ausgleichsmassen (101) frei beweglich auf der Kreisbahn angeordnet ist.

12. Orbitalschüttler nach einem der Ansprüche 1 bis 5, **dadurch gekennzeichnet, dass** die mehreren auf jeder Kreisbahn angeordneten Ausgleichsmassen (110) als Pendel ausgebildet sind, wobei jedes Pendel außerhalb seines Massenschwerpunktes drehbar um die Rotationsachse gelagert ist.

13. Orbitalschüttler nach Anspruch 12, **dadurch gekennzeichnet, dass** die Rotationsdämpfung als zwischen dem Rotor (3) und jedem Pendel (110) angeordnete(r) Wirbelstromkupplung und/oder hydraulischer Rotationsdämpfer ausgestaltet ist.

14. Orbitalschüttler nach einem der Ansprüche 1 bis 13, **dadurch gekennzeichnet, dass** das Führungssystem ein zweiachsiges Linearführungssystem (102, 103) umfasst, das für eine Bewegung des Rotors (3) in zwei rechtwinklig zueinander stehende Achsen (X/Y) innerhalb der senkrecht zur Rotationsachse (3a) stehenden Ebene eingerichtet ist.

15. Orbitalschüttler nach Anspruch 2 oder 3 und 14, **dadurch gekennzeichnet, dass** das Linearführungssystems (102, 103) mit dem Antriebsgestell (2) oder unmittelbar mit dem Stator verbunden ist.

16. Orbitalschüttler nach Anspruch 15, **dadurch gekennzeichnet, dass** der Verschiebewiderstand des Linearführungssystem (102, 103) in beiden Achsrichtungen einstellbar ist.

17. Orbitalschüttler nach einem der Ansprüche 3 bis 16, **dadurch gekennzeichnet, dass** mindestens ein Rückstellelement das Antriebsgestell (2) oder den Stator bei nicht rotierendem Rotor (3) in eine stets gleiche Ausgangsstellung bewegt.

18. Orbitalschüttler nach einem der Ansprüche 1 bis 17, **dadurch gekennzeichnet, dass** zum Ausgleich unwuchtbedingter Kräfte und/oder Momente an dem Rotor (3) mindestens ein ortsfestes Ausgleichsgewicht (10) angeordnet ist.

19. Orbitalschüttler nach einem der Ansprüche 1 bis 18, **dadurch gekennzeichnet, dass** der Orbitalschüttler mindestens zwei in Richtung der Rotationsachse (3a) versetzt zueinander angeordnete Auswuchtebenen aufweist.

20. Orbitalschüttler nach einem der Ansprüche 1 bis 19, **dadurch gekennzeichnet, dass** das Führungssystem Rundführungen (106, 108) umfasst, die für ein Kippen des Rotors um zwei rechtwinklig zueinander stehende Achsen, die innerhalb einer senkrecht zur Rotationsachse (3a) stehenden Ebene liegen, eingerichtet sind.

21. Orbitalschüttler nach einem der Ansprüche 1 bis 20, **gekennzeichnet durch** mindestens einen Dämpfer zur Dämpfung der Bewegungen des Führungssystems (102, 103, 106, 107, 108).

**Claims**

1. An orbital shaker comprising

    - a shaker table (5) with a surface for supporting a load (6, 7, 8, 9),
    - a rotor (3) rotatable around an axis of rotation (3a),
    - a drive adapted to produce the rotational movement of the rotor (3),
    - a rotary joint (4), which connects the rotor (3) and the shaker table (5) to one another so that they can rotate freely about a joint axis (4a), which runs with a parallel offset (e) to the axis of rotation (3a),
    - a guide (12, 13) which is adapted in such a manner that all points of the surface of the shaker table (5) describe a circular orbit with the same diameter as the rotor (3) rotates, which diameter corresponds to twice the parallel offset,

    **characterized by** a balancing device for the automatic compensation of imbalance-induced forces and/or moments comprising:

    - at least one balancing plane which is perpendicular to the axis of rotation (3a),
    - at least one circular orbit arranged concentrically around the axis of rotation (3a) in each balancing plane,
    - a plurality of compensating masses (101/110) arranged freely movably on each circular orbit,
    - a rotational damping mechanism adapted in such a manner that when there is a deviation between the rotational speed of the compensating masses (101/110) and the rotational speed of the rotor (3) about the axis of rotation (3a), a moment acts on the compensating masses (101/110),
- a guide system (102, 103, 106) adapted in such a manner thatit allows exclusively a translational movement of the rotor (3) within a plane which is perpendicular to the axis of rotation (3a) and/or a tilting of the rotor around two axes which are at right angles to each other and which lie in a plane perpendicular to the axis of rotation.

2. The orbital shaker according to claim 1, **characterized in that** the drive is configured as an electric motor with a stator and the rotor (3) as a movable part.

3. The orbital shaker according to claim 2, **characterized in that** the drive is fastened to a drive stand (2).

4. The orbital shaker according to one of claims 1 to 3, **characterized in that** the rotary joint (4) comprises a pin (4c) which defines the joint axis (4a) and is arranged eccentrically to the axis of rotation (3a), and a bearing (4b) which rotatably receives the pin (4c) .

5. The orbital shaker according to one of claims 1 to 3, **characterized in that** the parallel offset (e) between the axis of rotation (3a) and the joint axis (4a) is adjustable.

6. The orbital shaker according to one of claims 1 to 5, **characterized in that** a circular guide is arranged on the rotor (3) along each circular orbit which is adapted to guide the compensating masses (101, 110) on the at least one orbit.

7. The orbital shaker according to claim 6, **characterized in that** the circular guide has an annular cavity (100a, 100b).

8. The orbital shaker according to one of claims 1 to 7, **characterized in that** the compensating masses (101) are rolling bodies.

9. The orbital shaker according to claim 7 or claims 7 and 8, **characterized in that** the annular cavity (100a, 100b) is filled with a fluid as rotational damping mechanism.

10. The orbital shaker according to claim 9, **characterized in that** at least two annular cavities (100a or 100b) with different diameters are arranged concentrically about the axis of rotation (3a) in each balancing plane, wherein the annular cavities (100a or 100b) are filled with fluids of different viscosities.

11. The orbital shaker according to one of claims 6 to 10, **characterized in that** each circular guide is divided into at least two partially circular segments, and at least one of the compensating masses(101) is arranged freely movably on the circular orbit in each segment.

12. The orbital shaker according to one of claims 1 to 5, **characterized in that** the plurality of compensating masses (110) arranged on each circular orbit are configured as pendulums, wherein each pendulumis mounted outside its centre of mass rotatably about the axis of rotation.

13. The orbital shaker according to claim 12, **characterized in that** the rotational damping mechanism is configured as an eddy-current coupling and/or a hydraulic rotational damper arranged between the rotor (3) and each pendulum (110).

14. The orbital shaker according to one of claims 1 to 13, **characterized in that** the guide system comprises a double-axis linear guide system (102, 103) which is adapted for a movement of the rotor (3) in two axes (X/Y) at right angles to each other within the plane perpendicular to the axis of rotation (3a).

15. The orbital shaker according to claim 2 or 3 and 14, **characterized in that** the linear guide system (102, 103) is connected to the drive frame (2) or directly to the stator.

16. The orbital shaker according to claim 15, **characterized in that** the displacement resistance of the linear guide system (102, 103) is adjustable in both axial directions.

17. The orbital shaker according to one of claims 3 to 16, **characterized in that** at least one restoring element moves the drive frame (2) or the stator back into always the same starting position when the rotor (3) is not rotating.

18. The orbital shaker according to one of claims 1 to 17, **characterized in that** at least one positionally fixed compensating weight (10) is arranged on the rotor (3) to compensate for imbalance-induced forces and moments.

19. The orbital shaker according to one of claims 1 to 18, **characterized in that** the orbital shaker has at least two balancing planes arranged with an offset to each other in the direction of the axis of rotation (3a).

20. The orbital shaker according to one of claims 1 to 19, **characterized in that** the guide system comprises circular guides (106, 108) which are adapted for a tilting of the rotor about two axes which are at right angles to each other, which liewithin a plane perpendicular to the axis of rotation (3a).

21. The orbital shaker according to one of claims 1 to 20, **characterized by** at least one damper for damping the movements of the guide system (102, 103, 106, 107,108).

**Revendications**

1. Agitateur orbital comprenant :

   - unetable agitatrice (5) avec une surface destinée à recevoir unchargement (6, 7, 8, 9),
   - un rotor (3) rotatif autour d'un axe de rotation (3a),
   - un entraînement qui est aménagé pour générer le déplacement en rotation du rotor (3),
   - une articulation rotative (4), qui relie l'un à l'autre lerotor (3) et la table agitatrice (5) de manière mobile en rotationautour d'unaxe d'articulation (4a), qui s'étend avec un déport parallèle (e) par rapport à l'axe de rotation (3a),
   - un guidage (12, 13), qui est aménagé de telle sorte, que lorsque le rotor (3) tourne, tous les points de la surface de la table agitatrice (5) décrivent une trajectoire circulaire avec un diamètre concordant, qui correspond au double du déport parallèle,

   caractérisé parundispositif d'équilibrage destiné à l'équilibrage automatique de forces et/ou de moments du(e)s au déséquilibre, comprenant :

   - au moins unplan d'équilibrage, qui est perpendiculaire à l'axe de rotation (3a),
   - au moins une trajectoire circulaire placée dans chaque plan d'équilibrage de manière concentrique autour de l'axe de rotation (3a),
   - plusieurs masses d'équilibrage (101/110) placées de manière librement mobile sur chaque trajectoire circulaire,
   - un amortissement de rotationqui est aménagé pourque lors d'une divergence entre la vitesse de rotation desmasses d'équilibrage (101/110) etla vitesse de rotation durotor (3),un moment agisse sur les masses d'équilibrage (101/110), autour de l'axe de rotation (3a),
   - unsystème de guidage (102, 103, 106) qui est aménagé de telle sorte qu'il admet exclusivement un déplacement en translation durotor (3) à l'intérieur d'un plan, qui est parallèle à l'axe de rotation (3a)et/ouun basculement durotorautour de deux axes perpendiculaires l'un à l'autre, qui se situent à l'intérieur d'un plan perpendiculaire à l'axe de rotation.

2. Agitateur orbitalselon la revendication 1, **caractérisé en ce que** l'entraînement est conçu sous la forme d'un moteur électrique, avec unstatoretlerotor (3) en tant que pièce mobile.

3. Agitateur orbitalselon la revendication 2, caractérisé en ce quel'entraînement est fixé sur un châssis d'entraînement (2).

4. Agitateur orbitalselon l'une quelconque des revendications 1 à 3,**caractérisé en ce que** l'articulation rotative (4) comporte untenon (4c) définissant l'axe d'articulation (4a),placé de manière excentrique par rapport à l'axe de rotation (3a) etun palier (4b) recevant le tenon (4c) de manière rotative.

5. Agitateur orbitalselon l'une quelconque des revendications 1 à 3,caractérisé en ce quele déport parallèle (e) entre l'axe de rotation (3a) etl'axe d'articulation (4a) est réglable.

6. Agitateur orbitalselon l'une quelconque des revendications 1 à 5, caractérisé en ce quesur lerotor (3), le long de chaquetrajectoire circulaire est placé un guidage circulairequi est aménagé pour le guidage desmasses d'équilibrage (101, 110) sur la trajectoire circulaire.

7. Agitateur orbitalselon la revendication 6, **caractérisé en ce que** le guidage circulaire comporte une cavité annulaire (100a, 100b).

8. Agitateur orbitalselon l'une quelconque des revendications 1 à 7, **caractérisé en ce que** les masses d'équilibrage (101) sont conçues sous la forme de corps de roulement.

9. Agitateur orbitalselon la revendication 7 ou les revendications 7 et 8, **caractérisé en ce que** la cavité annulaire (100a, 100b) est remplie d'un fluide faisant office d'amortissement en rotation.

10. Agitateur orbitalselon la revendication 9, **caractérisé en ce que** dans chaque plan d'équilibrage,au moins deux cavités annulaire (100a ou 100b) de diamètres de grandeurs différentes sont placées de manière concentrique autour de l'axe de rotation (3a) ; les cavités annulaire (100a ou 100b) étant remplies de fluides de différente viscosité.

11. Agitateur orbitalselon l'une quelconque des revendications 6 à 10,**caractérisé en ce que** chaque guidage circulaire est divisé en au moins deux segments en forme de portions de cercleet **en ce que** dans chaque segment, au moins l'une des masses d'équilibrage(101) est placée de manière librement déplaçable sur la trajectoire circulaire.

12. Agitateur orbitalselon l'une quelconque des revendications 1 à 5,**caractérisé en ce que** les plusieurs masses d'équilibrage (110) placées sur chaque trajectoire circulaire sont conçues sous la forme de pendule, chaque pendule étant logé à l'extérieur de soncentre de gravité,en rotation autour de l'axe de rotation.

13. Agitateur orbitalselon la revendication 12, **caractérisé en ce que** l'amortissement en rotation est conçu sous la forme d'accouplement électromagnétique et/ou d'amortisseur en rotation hydraulique placé entre le rotor (3) et chaque pendule (110).

14. Agitateur orbitalselon l'une quelconque des revendications 1 à 13, **caractérisé en ce que** le système de guidagecomprend un système de guidage linéaire (102, 103) à deux axes, qui est aménagé pour déplacer lerotor (3) dans deux axes (X/Y) parallèles l'un à l'autre, à l'intérieur du plan placé à la perpendiculaire de l'axe de rotation (3a).

15. Agitateur orbitalselon la revendication 2 ou 3 et 14, caractérisé en ce quele système de guidage linéaire (102, 103) est relié avec le châssis d'entraînement (2) oudirectement avec lestator.

16. Agitateur orbitalselon la revendication 15, caractérisé en ce quela résistance au déplacement du système de guidage linéaire (102, 103) est réglable dans les deuxdirections axiales.

17. Agitateur orbitalselon l'une quelconque des revendications3à 16,**caractérisé en ce qu'**au moins un élément de rappel déplace le châssis d'entraînement (2) oulestatorlorsque lerotor (3) ne tourne pas dans une position de départ toujours identique.

18. Agitateur orbitalselon l'une quelconque des revendications 1 à 17,caractérisé en ce quepour compenser des forces et/ou des moments du(e)s au déséquilibre, au moins un poids d'équilibrage (10) stationnaire est placé sur le rotor (3).

19. Agitateur orbitalselon l'une quelconque des revendications 1 à 18,caractérisé en ce quel'agitateur orbitalcomporte au moins deux plans d'équilibrage placés en déport l'un par rapport à l'autre en direction de l'axe de rotation (3a).

20. Agitateur orbitalselon l'une quelconque des revendications 1 à 19,caractérisé en ce quele système de guidagecomprend des guidages circulaires (106, 108) qui sont aménagés pour faire basculer lerotorautour de deux axes perpendiculaires l'un à l'autre, qui se situent à l'intérieur d'un plan perpendiculaire à l'axe de rotation (3a).

21. Agitateur orbitalselon l'une quelconque des revendications 1 à 20, **caractérisé par** au moins un amortisseur destiné à amortir les déplacements du système de guidage (102, 103, 106, 107, 108).

Figur 1

6 (durchsichtig dargestellt)

5 (durchsichtig dargestellt)

100 (durchsichtig dargestellt)

Ausgleichskraft 1

Ausgleichskraft 2

Fliehkraft der Beladung

Transl. FG in y-Richtung

Translatorischer Freiheitsgrad in x-Richtung

1

2

3

4

7

8

101

102

103

$\Omega$

x  y  z

Figur 2

EP 3 145 629 B1

Stellkraft 1

Ausgleichskraft 1

Normalkraft 1

Figur 3a

Ausgleichskraft 2

Stellkraft 2

Normalkraft 2
(durchsichtig dargestellt)

x

MP

101

4

Δr

y

KU

100
(durchsichtig dargestellt)

103

1

5

(durchsichtig dargestellt)

6
(durchsichtig dargestellt)

102

7

8

Fliehkraft der Beladung

## Krafteck

Fliehkraft der Beladung

Restunwuchtkraft

Ausgleichskraft 1

Ausgleichskraft 2

EP 3 145 629 B1

Figur 3b

Ausgleichskraft fixe Ausgleichmasse

Ausgleichskraft oben

x

Figur 4

1

101

10

5

9

2

106

104

107

100b

Rotation um y

z

4a

3a

4b

4

4c

3

100a

13

12

105

Rotation um x

Translation in x

Ausgleichskraft unten

101

101

Fliehkraft der Beladung

Figur 5

7
9
13
5
10
4
100a
12
Translation in y
3b
108
Translation in x
Rotation um x
Rotation um y
2
1
105
3
100b

z
x
y

Figur 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8226291 B2
- US 5558437 A
- EP 2450099 A1
- US 4109319 A
- US 2011052113 A1
- US 5142936 A
- US 2405404 A